# EUROPÄISCHE PATENTSCHRIFT

(11) **EP 3 199 337 B1**
(45) Veröffentlichungstag und Bekanntmachung des Hinweises auf die Patenterteilung: **10.07.2024**
(21) Anmeldenummer: 16152886.4
(22) Anmeldetag: 27.01.2016
(51) Int. Cl.: B32B 7/02, B32B 29/00, B32B 38/08, B44C 5/04

(54) **SCHICHTSTOFFLAMINAT**
COATING LAMINATE
MATIERE STRATIFIEE

(43) Veröffentlichungstag der Anmeldung: 02.08.2017
(73) Patentinhaber: Interprint GmbH, 59707 Arnsberg (DE)
(72) Erfinder: Stirnberg, Marcel, 58821 Arnsberg (DE)
(74) Vertreter: Basfeld, Rainer

(56) Entgegenhaltungen:
- WO-A1-02/079572
- US-A- 4 895 759

## Beschreibung

Die vorliegende Erfindung betrifft ein Schichtstofflaminat gemäß dem Oberbegriff des Anspruchs 1.

Schichtstofflaminate sind beispielsweise aus der DE 10 2013 112 275 A1 bekannt geworden.

Ein Schichtstofflaminat der eingangs genannten Art ist aus der US 4 895 759 A bekannt. Das darin beschriebene Schichtstofflaminat umfasst ein Dekorpapier und ein das Dekorpapier umgebendes Overlay. Das Dekorpapier weist TiO₂ auf. Teilweise ist bei dem Dekorpapier der US 4 895 759 A TiO₂ durch SiO₂ ersetzt worden, ohne dabei die Opazität zu verringern, die bei jedem in dieser Druckschrift beschriebenen Ausführungsbeispiele größer als 87% ist.

Schichtstofflaminate erfüllen üblicherweise zwei Aufgaben. Sie dienen einerseits der Dekoration von Oberflächen, andererseits schirmen sie ein Trägermaterial gegen Umwelteinflüsse ab. Schichtstofflaminate sind als HPL und CPL bekannt. Sie weisen eine hohe Abriebfestigkeit und Kratzfestigkeit auf, können um Radien gezogen werden. Schichtstofflaminate werden in der Regel auf einen Träger aufgebracht, um beispielsweise Küchenarbeitsplatten, Tischplatten oder Türblätter herzustellen.

Schichtstofflaminate bestehen in der Regel aus einem Overlay, das die Widerstandsfähigkeit gegen Umwelteinflüsse sicherstellt, einem Dekorpapier, das bedruckt oder nicht bedruckt sein kann, einem oder mehreren Kernpapieren, die meist als Pergamentpapier ausgestaltet sind, das / die für eine mechanische Stabilität des

Schichtstofflaminats sorgt und einem weiteren Overlay, welches auf Grund seiner Lage auch als Gegenzug zum Dekorpapier oder Underlay bezeichnet wird. Ein gewöhnliches Schichtstofflaminat hat eine Dicke von etwa 1 mm. Wenn Schichtstofflaminate um sehr kleine Radien gebogen werden sollen, verwendet der Fachmann ein Dünnlaminat, bei dem die Dicke auf etwa 0,2 mm und kleiner reduziert wird.

Dabei kann das Dekorpapier mit einem Harz imprägniert sein. Es besteht auch die Möglichkeit ein harzfreies Dekorpapier zusammen mit einem harzgetränkten Overlay und/oder Kernpapier einzusetzen. Hier penetriert Harz aus den vorgenannten Schichten in das Dekorpapier. In diesem Fall spricht man auch von einer Trockenverpressung.

Schichtstofflaminate sind immer sehr opak, damit sie den Träger abdecken. Die Opazität des Schichtstofflaminats wird durch die Menge an TiO₂, insbesondere in dem Dekorpapier und/oder dem Kernpapier, eingestellt. Hier wird ein Kompromiss aus den Kosten für das TiO₂, der Festigkeit des Papiers und der Opazität des Papiers gewählt.

Die DIN 53146 beschreibt, wie eine Opazität bestimmt werden kann. Dabei wird die Reflexion über einem weißen und über einem schwarzen Untergrund verglichen. Die Opazität ist das Gegenteil der Transparenz. Schichtstofflaminate haben eine Opazität größer 80%.

Wenn transparente Dekorationen beispielsweise vor Beleuchtungen gewünscht sind, werden üblicherweise bedrucktes Glas, Kunststoffe oder Kunststofffolien, die zwischen Glasscheiben eingebettet sind, eingesetzt. Diese weisen einige Nachteile auf. Glas ist verhältnismäßig schwer, Kunststoffe sind wenig kratz- und/oder hitzebeständig.

Hier setzt die vorliegende Erfindung an und macht es sich zur Aufgabe ein verbessertes Schichtstofflaminat bereitzustellen, insbesondere ein Schichtstofflaminat bereitzustellen, welches als Substitut für transparente Materialien eingesetzt werden kann.

Erfindungsgemäß wird diese Aufgabe durch ein Schichtstofflaminat mit den kennzeichnenden Merkmalen des Anspruchs 1 gelöst. Dadurch, dass das Dekorpapier kein TiO₂ oder maximal 40Gew.% TiO₂ enthält, und dass das Schichtstofflaminat eine Opazität nach DIN 53146 kleiner 50% aufweist, kann ein weitgehend transparentes Schichtstofflaminat bereitgestellt werden, welches andere transparente Materialien, insbesondere Dekorationen, ersetzen kann. Die erfindungsgemäßen Schichtstofflaminate können wie herkömmliche Schichtstofflaminate auf Trägermaterialien aufgebracht werden. Gleichwohl liegt ihr Einsatzzweck auf Grund der Transparenz vorzugsweise im Bereich ebenfalls transparenter Trägermaterialien, illuminierter Trägermaterialien oder Trägermaterialien, deren Oberfläche bewusst durchscheinen oder deren äußeres Erscheinungsbild mit dem erfindungsgemäßen Schichtstofflaminat verändert werden soll. Auch kann das erfindungsgemäße Schichtstofflaminat als eigenständiges Material eingesetzt werden. Dieses Schichtstofflaminat kann beispielsweise dort eingesetzt werden, wo es durchleuchtet wird. Es ersetzt somit Abdeckungen oder Abtrennungen aus Glas oder Kunststoff. Dabei ist das erfindungsgemäße Schichtstofflaminat deutlich leichter als Glas. Es zeichnet sich durch alle vorteilhaften Eigenschaften eines HPL oder CPL aus. Zu nennen sind eine gute Kratzfestigkeit von beispielsweise bis zu 2 N, eine gute Stoßfestigkeit von beispielsweise bis zu 20N und eine Abriebfestigkeit von beispielsweise bis zu 350 Umdrehungen gemäß DIN EN 438 sowie eine gute Beständigkeit gegen Umwelteinflüsse, wie trockener Hitze oder Zigarettenglut. Das erfindungsgemäße Schichtstofflaminat kann wahlweise auch vor oder hinter eine Glasscheibe geklebt werden oder zwischen zwei Glasscheiben eingebracht werden.

Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden.

In einer vorteilhaften Ausgestaltung der vorgeschlagenen Erfindung kann vorgesehen sein, dass das Schichtstofflaminat ausschließlich das Overlay und das Dekorpapier umfasst. Diese Anordnung stellt den einfachsten Aufbau eines erfindungsgemäßen Schichtstofflaminats dar. Es ergibt sich ein vergleichsweise dünnes Schichtstofflaminat mit grundsätzlich guter Biegefähigkeit. Bei entsprechend transparentem Overlay ergibt sich insgesamt ein überaus transparentes Schichtstofflaminat.

In einer weiteren vorteilhaften Ausgestaltung der vorgeschlagenen Erfindung kann vorgesehen sein, dass das Schichtstofflaminat ausschließlich das Overlay, das Dekorpapier und ein weiteres Overlay umfasst, wobei das Dekorpapier zwischen den Overlays angeordnet ist. Ein derartiges Schichtstofflaminat weist ein weiteres Overlay auf, welches auch auf Grund seiner Lage als Gegenzug oder Underlay bezeichnet werden kann. Durch das weitere Overlay gewinnt das Schichtstofflaminat gegenüber der Ausführungsform mit ausschließlich einem Overlay an Stabilität.

In einer weiteren vorteilhaften Ausgestaltung der vorgeschlagenen Erfindung kann vorgesehen sein, dass das Schichtstofflaminat mindestens ein Kernpapier umfasst. Bei dem Kernpapier kann es sich beispielsweise um ein mit Phenolharz getränktes Kraftpapier oder Pergamentpapier oder andere imprägnierte Papiere handeln. Das bzw. die Kernpapiere verringern in der Regel die Transparenz. Diese Wirkung kann aber durchaus gewünscht sein, um beispielsweise Effekte ähnlich einem Milchglas zu erzeugen.

In einer weiteren vorteilhaften Ausgestaltung der vorgeschlagenen Erfindung kann vorgesehen sein, dass das Schichtstofflaminat mindestens ein weiteres Overlay umfasst. Die Stabilität des transparenten Schichtstofflaminats kann durch den Aufbau, insbesondere der Anzahl aufgelegter Overlaypapiere, gezielt eingestellt werden.

In einer weiteren vorteilhaften Ausgestaltung der vorgeschlagenen Erfindung kann vorgesehen sein, dass das Overlay mit Korund versetzt ist. Durch diese Maßnahme kann die Kratzfestigkeit und die Abriebfestigkeit weiter erhöht werden.

In einer weiteren vorteilhaften Ausgestaltung der vorgeschlagenen Erfindung kann vorgesehen sein, dass das Dekorpapier mit einem Harz, insbesondere einem Melaminharz oder Urea-Harz oder einer Mischung daraus oder Polyurethan, imprägniert ist. Das Dekorpapier kann dann auf einfache Art und Weise mit den übrigen Komponenten, insbesondere dem bzw. den Overlays und ggf. den bzw. der weiteren Papierschicht verpresst werden um so eine unlösbare Verbindung einzugehen. In dieser Ausgestaltung kann beispielsweise darauf verzichtet werden, das bzw. die Overlays und/oder die weitere(n) Papierschicht(en) in Harz zu tränken.

In einer weiteren vorteilhaften Ausgestaltung der vorgeschlagenen Erfindung kann vorgesehen sein, dass das Overlay und/oder die weitere Papierschicht mit einem Harz, insbesondere einem Melaminharz oder Urea-Harz oder einer Mischung daraus oder Polyurethan, imprägniert ist. In dieser Ausgestaltung kann beispielsweise auf die Tränkung des Dekorpapiers mit Harz verzichtet werden. Das für die Verpressung bzw. Verbindung der Schichten notwendige Harz wird entsprechend durch die vorgenannten Schichten bereitgestellt. Auf eine Tränkung des Dekorpapiers mit Harz kann entsprechend verzichtet werden.

In einer weiteren vorteilhaften Ausgestaltung der vorgeschlagenen Erfindung kann vorgesehen sein, dass Overlaypapiere bzw.

Dekorpapiere mit unterschiedlichen Grammaturen eingesetzt werden. Auch über diese Maßnahme kann Einfluss auf die Transparenz genommen werden. Im Wesentlichen gilt hier: Je geringer die Grammatur, desto besser wird die Transparenz.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine Querschnittdarstellung eines erfindungsgemäßen Schichtstofflaminats;
- Fig. 2: eine Querschnittdarstellung eines erfindungsgemäßen Schichtstofflaminats;
- Fig. 3: ein erfindungsgemäßes Schichtstofflaminat gemäß Fig. 2 in einer Draufsicht;
- Fig. 4: ein erfindungsgemäßes Schichtstofflaminat gemäß Fig. 2 in einer Ansicht von Unten;
- Fig. 5: eine Querschnittdarstellung eines erfindungsgemäßen Schichtstofflaminats;
- Fig. 6: eine Querschnittdarstellung eines erfindungsgemäßen Schichtstofflaminats.

Folgende Bezugszeichen werden in den Abbildungen verwendet:
- 1: Overlay
- 2: Dekorpapier
- 3: Overlay
- 4: Kernpapier
- 5: Overlay
- 6: Overlay

Ein erfindungsgemäßes Schichtstofflaminat umfasst im Wesentlichen ein Overlay 1, auch Overlaypapier genannt, und ein Dekorpapier 2 mit geringem Anteil TiO₂ oder ohne TiO_{2.} Das erfindungsgemäße Schichtstofflaminat kann weitere Schichten, wie beispielsweise weitere Overlays 3, 5, 6 und/oder Kernpapier(e) 4 umfassen.

Als Anteile TiO₂ im Dekorpapier 2 kommen Werte zwischen 0 und 40% Gewichtsanteil, bevorzugt zwischen 10% und 30% Gewichtsanteil und besonders bevorzugt zwischen 15% und 25% Gewichtsanteil in Frage.

Bei dem Overlay 1, 3, 5, 6 handelt es sich im Wesentlichen um Papiere mit sehr langen Fasern und sehr geringe Stoffdichte. Sie sind beispielsweise in DE 101 63 344 B4 dargestellt. Overlaypapiere 1, 3, 5, 6, sind grundsätzlich nach der Weiterverarbeitung transparent. Die für das erfindungsgemäße Schichtstofflaminat verwendeten Overlaypapiere 1, 3, 5, 6 können vorzugsweise eine Transparenz von 50% bis 100% aufweisen. Ferner können die für das erfindungsgemäße Schichtstofflaminat verwendeten Overlaypapiere 1, 3, 5, 6 eine Dicke von vorzugsweise 10 µm bis 40 µm aufweisen.

Overlaypapiere 1, 3, 5, 6 sind in unterschiedlichen Massebelegungen, auch Grammaturen genannt, einsetzbar. Als Massenbelegung wird das Verhältnis von Masse m und Fläche A einer Schicht bezeichnet.

In der Papier- und Druckbranche sowie in der stoffverarbeitenden Branche ist daneben die Bezeichnung Grammatur (G) üblich, die in g/m² angegeben wird. Je geringer die Grammatur, desto besser wird die Transparenz. Overlays 1, 3, 5, 6 können mit Korund versetzt sein, um die Kratzfestigkeit und die Abriebfestigkeit weiter zu erhöhen.

Dekorpapiere 2 sind Spezialpapiere. Als Dekor werden oft Reproduktionen von Holz- oder Steinoberflächen aufgedruckt. Zur optimalen Bedruckbarkeit erfordert das Papier eine besonders gute Formation, Glätte und Dimensionsstabilität. Es existieren aber auch unbedruckte Dekorpapiere, die beispielsweise eingefärbt sind. Dekorpapiere 2 werden in der Regel mit einem Harz imprägniert. Insofern zeichnen sich Dekorpapiere durch eine gute Harzaufnahmefähigkeit aus.

Auch Dekorpapiere 2 sind in unterschiedlichen Grammaturen einsetzbar, je geringer die Grammatur, desto besser wird die Transparenz. Das Dekorpapier 2 mit geringem Anteil an TiO2 oder ohne TiO2 kann bedruckt oder beliebig eingefärbt sein. Das Dekorpapier 2 kann mit einem Melaminharz oder Urea-Harz oder einer Mischung daraus oder Polyurethan imprägniert sein und zusammen mit den Overlays als HPL (High Pressure Laminate) oder CPL (Continuous Pressure Laminate) verpresst werden. Die Presseinstellungen sind dem Fachmann bekannt oder können von ihm leicht ermittelt werden.

Das Dekorpapier 2 kann auch nicht imprägniert sein. Für diesen Fall kann vorgesehen sein, dass das bzw. die Overlays 1, 3, 5, 6 und/oder das oder die Kernpapiere 4 mit einem geeigneten Harz (Phenolharz, Melaminharz, Urea-Melaminharz etc.) imprägniert sind. Die vorgenannten Papiere können dann als HPL oder CPL als sogenannte Trockenverpressung miteinander verpresst werden.

Die für das erfindungsgemäße Schichtstofflaminat verwendeten Dekorpapiere können vorzugsweise eine Dicke von 15 µm bis 70 µm aufweisen.

Als Pressen können Einzelpressen, Mehretagenpressen oder Pressen mit einem umlaufenden Band (Doppelbandpressen) eingesetzt werden.

Die Stabilität des transparenten Schichtstofflaminats kann durch den Aufbau, insbesondere der Anzahl aufgelegter Overlaypapiere gezielt eingestellt werden. Das Schichtstofflaminat kann entsprechend ein weiteres Overlay 3 umfassen, welches im Hinblick auf das erste Overlay 1 auf der gegenüberliegenden Seite des Dekorpapiers 2 angeordnet ist. Auf Grund der Lage des zweiten Overlays 3 wird dieses auch als Underlay oder Gegenzug bezeichnet. Grundsätzlich kann aber auch vorgesehen sein, dass das erfindungsgemäße Schichtstofflaminat mit mehr als zwei Overlaypapieren, beispielsweise vier Overlaypapieren 1, 3, 5, 6, ausgestattet ist.

Ebenfalls ist es möglich in das Schichtstofflaminat, insbesondere unter das Dekorpapier 2, ein oder mehrere Kernpapiere 4, wie beispielsweise mit Phenolharz getränkte Kraftpapiere oder Pergamentpapiere oder andere Papiere, vorzugsweise imprägnierte Papiere, einzubauen. Dies geht dann allerdings zu Lasten der Transparenz, kann aber durchaus gewünscht sein, um beispielsweise Effekte ähnlich Milchglas zu erzeugen.

Die für das erfindungsgemäße Schichtstofflaminat verwendeten Kernpapiere 4 können vorzugsweise eine Dicke von 25 µm bis 70 µm aufweisen.

Die Transparenz eines Schichtstofflaminats kann auch durch die Wahl der Imprägnierharze und ihrer Brechungsindizes beeinflusst werden.

Wenn keine mit Phenolharz imprägnierten Papiere verwendet werden, dann kann das transparente Schichtstofflaminat allein aus nachwachsenden Rohstoffen hergestellt werden.

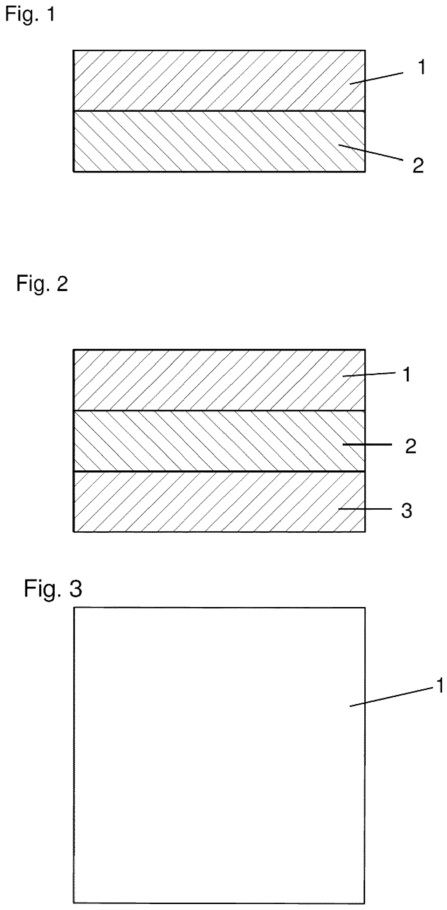

Die Fig. 1 zeigt ein Schichtstofflaminat mit folgendem Aufbau:
- 1 -: Overlay
- 2 -: Dekorpapier

Die Fig. 2 zeigt ein Schichtstofflaminat mit folgendem Aufbau:
- 1 -: Overlay
- 2 -: Dekorpapier
- 3 -: Overlay

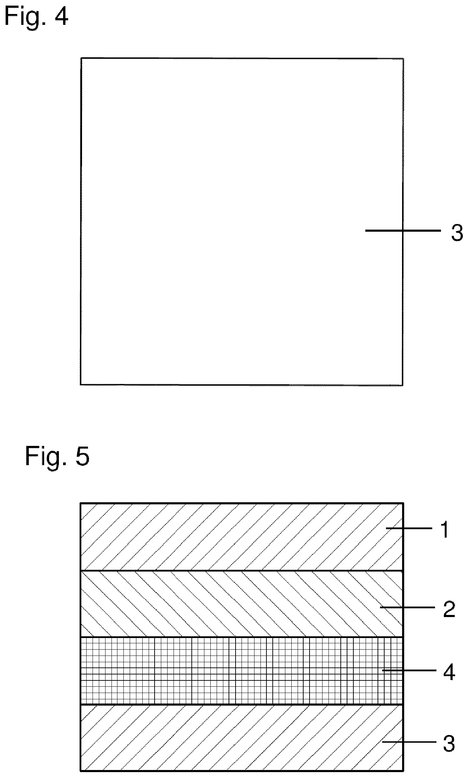

Die Fig. 5 zeigt ein Schichtstofflaminat mit folgendem Aufbau:
- 1 -: Overlay
- 2 -: Dekorpapier
- 4 -: Kernpapier, beispielsweise Pergamentpapier
- 3 -: Overlay

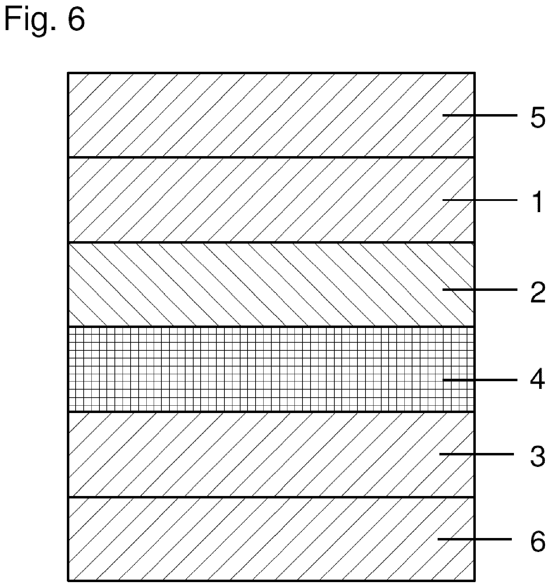

Die Fig. 6 zeigt ein Schichtstofflaminat mit folgendem Aufbau:
- 5 -: Overlay
- 1 -: Overlay
- 2 -: Dekorpapier
- 4 -: Kernpapier, beispielsweise Pergamentpapier
- 3 -: Overlay
- 6 -: Overlay

Das Schichtstofflaminat gemäß Fig. 6 kann auch ohne das Kernpapier 4 ausgeführt sein.

Die vorgenannten Papiere liegen in der Regel schichtförmig vor, so dass insgesamt ebenfalls ein flaches, schichtförmiges Schichtstofflaminat gebildet wird.

Die erfindungsgemäßen Schichtstofflaminate weisen eine Opazität nach DIN 53146 kleiner 50%, bevorzugt kleiner 40% und besonders bevorzugt kleiner 30%, auf.

Hieraus ergeben sich insbesondere folgende Vorteile:
Das transparente Schichtstofflaminat ist deutlich leichter als Glas. Es zeichnet sich durch alle Eigenschaften eines HPL oder CPL aus. Zu nennen sind eine gute Kratzfestigkeit von bis zu 2 N, eine gute Stoßfestigkeit von bis zu 20N und eine Abriebfestigkeit von bis zu 350 Umdrehungen gemäß DIN EN 438 sowie Beständigkeit gegen Umwelteinflüssen wie trockener Hitze oder Zigarettenglut. Das transparente Schichtstofflaminat kann wahlweise auch vor oder hinter eine Glasscheibe geklebt werden oder zwischen zwei Glasscheiben eingebracht werden. Das transparente Schichtstofflaminat ist robuster als Kunststoffe, es ist insbesondere kratzfester und hitzebeständiger. Die Stabilität des transparenten Schichtstofflaminats kann durch den Aufbau insbesondere der Anzahl aufgelegter Overlaypapiere gezielt eingestellt werden. Das Druckbild auf dem Dekorpapier ist scharf und klar. Wenn keine mit Phenolharz imprägnierten Papiere verwendet werden, dann kann das transparente Schichtstofflaminat allein aus nachwachsenden Rohstoffen hergestellt werden.

Für das erfindungsgemäße Schichtstofflaminat sind insbesondere folgende Anwendungsgebiete denkbar:
- Abdeckungen von Beleuchtungselementen bei Möbeln oder im Bereich Messebau / Innenarchitektur
- Informationsträger für beleuchtete Außenwerbung
- Dekorative Gestaltung von OLED-Flächen
- ...

## Patentansprüche

1. Schichtstofflaminat, umfassend mindestens ein Overlay (1) und ein Dekorpapier (2), **dadurch gekennzeichnet, dass** das Dekorpapier (2) kein TiO₂ oder maximal 40Gew.% TiO₂ enthält, und dass das Schichtstofflaminat eine Opazität nach DIN 53146 kleiner 50% aufweist.

2. Schichtstofflaminat nach Anspruch 1, **dadurch gekennzeichnet, dass** das Schichtstofflaminat ausschließlich das Overlay (1) und das Dekorpapier (2) umfasst.

3. Schichtstofflaminat nach Anspruch 1, **dadurch gekennzeichnet, dass** das Schichtstofflaminat ausschließlich das Overlay (1), das Dekorpapier (2) und ein weiteres Overlay (3) umfasst, wobei das Dekorpapier (2) zwischen den Overlays (1, 3) angeordnet ist.

4. Schichtstofflaminat nach Anspruch 1, **dadurch gekennzeichnet, dass** das Schichtstofflaminat mindestens ein Kernpapier (4) umfasst.

5. Schichtstofflaminat nach Anspruch 4, **dadurch gekennzeichnet, dass** es sich bei dem Kernpapier (4) um ein mit Phenolharz getränktes Kraftpapier oder Pergamentpapier oder andere imprägnierte Papiere handelt.

6. Schichtstofflaminat nach Anspruch 1 oder 4, **dadurch gekennzeichnet, dass** das Schichtstofflaminat mindestens ein weiteres Overlay (3, 5, 6) umfasst.

7. Schichtstofflaminat nach mindestens einem der vorhergehenden Ansprüche, **dadurch gekennzeichnet, dass** das Overlay (1, 3, 5, 6) mit Korund versetzt ist.

8. Schichtstofflaminat nach mindestens einem der vorhergehenden Ansprüche, **dadurch gekennzeichnet, dass** das Dekorpapier (2) mit einem Harz, insbesondere einem Melaminharz oder Urea-Harz oder einer Mischung daraus oder Polyurethan, imprägniert ist.

9. Schichtstofflaminat nach mindestens einem der vorhergehenden Ansprüche, **dadurch gekennzeichnet, dass** das Overlay (1, 3, 5, 6) und/oder das Kernpapier (4) mit einem Harz, insbesondere einem Melaminharz oder Urea-Harz oder einer Mischung daraus oder Polyurethan, imprägniert ist.

10. Schichtstofflaminat nach mindestens einem der vorhergehenden Ansprüche, **dadurch gekennzeichnet, dass** Overlaypapiere (1, 3, 5, 6) bzw. Dekorpapiere (2) mit unterschiedlichen Grammaturen eingesetzt werden.

11. Schichtstofflaminat nach mindestens einem der vorhergehenden Ansprüche, **dadurch gekennzeichnet, dass** das Dekorpapier (2) zwischen 10% und 30% Gewichtsanteil, insbesondere zwischen 15% und 25% Gewichtsanteil, TiO₂ enthält.

12. Schichtstofflaminat nach mindestens einem der vorhergehenden Ansprüche, **dadurch gekennzeichnet, dass** das Dekorpapier (2) eine Dicke von 15 µm bis 70 µm aufweist.

13. Schichtstofflaminat nach mindestens einem der vorhergehenden Ansprüche, **dadurch gekennzeichnet, dass** das Kernpapier (4) eine Dicke von 25 µm bis 70 µm aufweist.

## Claims

1. Coating laminate, comprising at least one overlay (1) and one decorative paper (2), **characterised in that** the decorative paper (2) contains no TiO₂ or a maximum of 40% by weight of TiO₂, and that the coating laminate has an opacity according to DIN 53146 of less than 50%.

2. Coating laminate according to claim 1, **characterised in that** the coating laminate comprises solely the overlay (1) and the decorative paper (2).

3. Coating laminate according to claim 1, **characterised in that** the coating laminate comprises solely the overlay (1), the decorative paper (2) and a further overlay (3), wherein the decorative paper (2) is arranged between the overlays (1, 3).

4. Coating laminate according to claim 1, **characterised in that** the coating laminate comprises at least one core paper (4).

5. Coating laminate according to claim 4, **characterised in that** the core paper (4) is a kraft paper or parchment paper impregnated with a phenolic resin or other impregnated paper.

6. Coating laminate according to claim 1 or 4, **characterised in that** the coating laminate comprises at least one further overlay (3, 5, 6).

7. Coating laminate according to at least one of the preceding claims, **characterised in that** the overlay (1, 3, 5, 6) is mixed with corundum.

8. Coating laminate according to at least one of the preceding claims, **characterised in that** the decorative paper (2) is impregnated with a resin, in particular a melamine resin or urea resin or a mixture thereof or polyurethane.

9. Coating laminate according to at least one of the preceding claims, **characterised in that** the overlay (1, 3, 5, 6) and/or the core paper (4) is impregnated with a resin, in particular a melamine resin or urea resin or a mixture thereof or polyurethane.

10. Coating laminate according to at least one of the preceding claims, **characterised in that** overlay papers (1, 3, 5, 6) and/or decorative papers (2) with different grammages are used.

11. Coating laminate according to at least one of the preceding claims, **characterised in that** the decorative paper (2) contains between 10% and 30% by weight, in particular between 15% and 25% by weight, of TiO₂.

12. Coating laminate according to at least one of the preceding claims, **characterised in that** the decorative paper (2) has a thickness of 15 µm to 70 µm.

13. Coating laminate according to at least one of the preceding claims, **characterised in that** the core paper (4) has a thickness of 25 µm to 70 µm.

## Revendications

1. Matériau stratifié, comprenant au moins une superposition (1) et un papier décoratif (2), **caractérisé en ce que** le papier décoratif (2) ne contient pas de TiO₂ ou contient au maximum 40 % en poids de TiO₂, et **en ce que** le matériau stratifié présente une opacité selon la norme DIN 53146 inférieure à 50 %.

2. Matériau stratifié selon la revendication 1, **caractérisé en ce que** le matériau stratifié comprend exclusivement la superposition (1) et le papier décoratif (2).

3. Matériau stratifié selon la revendication 1, **caractérisé en ce que** le matériau stratifié comprend exclusivement la superposition (1), le papier décoratif (2) et une autre superposition (3), dans lequel le papier décoratif (2) est disposé entre les superpositions (1, 3).

4. Matériau stratifié selon la revendication 1, **caractérisé en ce que** le matériau stratifié comprend au moins un papier support (4).

5. Matériau stratifié selon la revendication 4, **caractérisé en ce que** le papier support (4) est un papier kraft ou un papier parchemin imbibé de résine phénolique ou d'autres papiers imprégnés.

6. Matériau stratifié selon la revendication 1 ou 4, **caractérisé en ce que** le matériau stratifié comprend au moins une autre superposition (3, 5, 6).

7. Matériau stratifié selon au moins l'une quelconque des revendications précédentes, **caractérisé en ce que** la superposition (1, 3, 5, 6) est mélangé à du corindon.

8. Matériau stratifié selon au moins l'une quelconque des revendications précédentes, **caractérisé en ce que** le papier décoratif (2) est imprégné d'une résine, en particulier d'une résine mélamine ou d'une résine d'urée ou d'un mélange de celles-ci ou de polyuréthane.

9. Matériau stratifié selon au moins l'une quelconque des revendications précédentes, **caractérisé en ce que** la superposition (1, 3, 5, 6) et/ou le papier support (4) est imprégné d'une résine, en particulier d'une résine mélamine ou d'une résine d'urée ou d'un mélange de celles-ci ou de polyuréthane.

10. Matériau stratifié selon au moins l'une quelconque des revendications précédentes, **caractérisé en ce que** les papiers de superposition (1, 3, 5, 6) ou les papiers décoratifs (2) sont utilisés avec des grammages différents.

11. Matériau stratifié selon au moins l'une quelconque des revendications précédentes, **caractérisé en ce que** le papier décoratif (2) contient entre 10 % et 30 % de pourcentage en poids, en particulier entre 15 % et 25 % de pourcentage en poids de TiO₂.

12. Matériau stratifié selon au moins l'une quelconque des revendications précédentes, **caractérisé en ce que** le papier décoratif (2) présente une épaisseur allant de 15 µm à 70 µm.

13. Matériau stratifié selon au moins l'une quelconque des revendications précédentes, **caractérisé en ce que** le papier support (4) présente une épaisseur allant de 25 µm à 70 µm.
